Europäisches Patentamt

European Patent Office

Office européen des brevets

(19)

(11) **EP 0 461 966 B1**

(12) **FASCICULE DE BREVET EUROPEEN**

(45) Date de publication et mention
de la délivrance du brevet:
**07.04.1999 Bulletin 1999/14**

(51) Int Cl.6: **C09J 177/00**
// B32B27/00,(C09J177/00,
151:00)

(21) Numéro de dépôt: **91401491.5**

(22) Date de dépôt: **07.06.1991**

(54) **Films à base d'élastomère(s) thermoplastique(s) à base de polyamide et de copolyoléfine(s) modifiée(s) aptes au collage, matériaux composites obtenus à partir desdits films**

Filme auf Basis von thermoplastischem(n) Elastomer(en) aus klebefähigem Polyamid und modifizierten Copolyolefinen und Verbundstoffen aus diesen Filmen

Thermoplastic elastomeric films based on polyamide and modified copolyolefine(s), apt for glueing composite materials obtained therewith

(84) Etats contractants désignés:
**AT BE CH DE DK ES FR GB GR IT LI LU NL SE**

(30) Priorité: **14.06.1990 FR 9007420**

(43) Date de publication de la demande:
**18.12.1991 Bulletin 1991/51**

(73) Titulaire: **ELF ATOCHEM S.A.**
**92800 Puteaux, Hauts-de-Seine (FR)**

(72) Inventeurs:
• **Vasselin, Thierry**
**F-27000 Evreux (FR)**

• **Vuachet, Michel**
**F-69500 Bron (FR)**

(56) Documents cités:
**EP-A- 0 328 439          EP-A- 0 459 862**
**US-A- 4 661 401**

• **PATENT ABSTRACTS OF JAPAN, vol. 13, no. 427 (C-639)[3775], 22 octobre 1989; & JP-A-1 163 234 (TORAY INDUSTRIES INC.) 27-06-1989**

## Description

La présente invention a pour objet des matériaux multicouches comprenant une couche à base d'un mélange d'un élastomère thermoplastique (TPE) à base de polyamide tel qu'un polyesteramide ou un polyetheramide et d'une polyoléfine modifiée telle qu'un caoutchouc EPR ou EPDM maléisé.

Selon Modern Plastics Encyclopedia, on réserve le terme "film" à des objets de section plane dont l'épaisseur est inférieure à 250 μm et le terme "feuille" à des objets d'épaisseur supérieure et pouvant atteindre plusieurs mm, mais dans tout ce qui suit, et pour des raisons de simplification, on pourra utiliser l'un ou l'autre des termes pour désigner simultanément films et feuilles.

Dans les films thermoplastiques, on rencontre notamment les films "hot melts". On peut citer les adhésifs décrits dans la demande FR 2 523 143, et dont la composition contient des copolymères à base d'éthylène (au moins 35 % en poids) et d'au moins un ester vinylique et contenant de 0,5 à 20 % d'un copolyétheresteramide. Dans la demande EP 312 968, on décrit également des "hot melts" extrudés utilisés comme adhésif et constitués principalement d'un élastomère thermoplastique et d'un promoteur d'adhésion, tel qu'une résine époxyde ou silane.

La demande EP 459862 décrit des matériaux multicouches comprenant une couche à base d'un mélange d'un polyesteramide ou d'un polyetheramide et d'une polyoléfine modifiée choisie parmi :

- les copolymères comprenant (i) un monomère d'éthylène ou d'alphaoléfine ou éventuellement de dioléfine et (ii) au moins un comonomère choisi parmi les esters vinyliques d'acide carboxylique saturé, les acides mono- et dicarboxyliques insaturés, leurs esters, sels, les anhydrides d'acides dicarboxyliques ; ces copolymères comprenant au moins 50 % en poids d'oléfines ;
- les copolymères blocs SBS, SIS ou SEBS maléisés.

Ce matériau multicouches de l'invention comprend :

a une couche d'élastomère thermoplastique à base de polyamide ou copolymère EVOH ou leur mélange.

b un film comprenant un mélange :

b1 d'un polyesteramide ou d'un polyetheramide
b2 une copolyoléfine modifiée et tel que b1 / (b1 + b2) est supérieur à 50 % en poids, la copolyoléfine modifiée étant choisie parmi les caoutchoucs d'éthylène et de propylène maléisés et les copolymères d'éthylène, de propylène et de diène maléisés.

Selon une autre caractéristique de l'invention les couches coextrudées a et b sont collées par formage à chaud du côté de b sur un matériau synthétique de préférence à base de résine epoxyde, de polyester ou de polyuréthanne.

Selon une autre caractéristique de l'invention les couches coextrudées a et b sont collées du côté de b sur un matériau à base de résine epoxyde, de polyester ou de polyuréthanne ; ledit matériau étant recouvert ou imprégné de résine epoxyde, de polyester ou de polyuréthanne.

Selon une forme le matériau de l'invention comprend successivement

- un film de polycarbonate
- le film b
- un film à base de copolymère EVOH

Selon une autre forme de l'invention le matériau multicouches comprend successivement :

- un premier élément (1)
- le film b
- une colle (5)
- un deuxième élément (2)

Le matériau précédent peut être d'une forme particulière telle que (i) le premier élément (1) à une surface de jonction (3) en l'un des matériaux suivants : polyamide, polyéthylène, polypropylène, polyéthylène ou polybutylène téréphtalate, aluminium traité, alliage d'aluminium ou acier et (ii) que la colle (5) est une colle epoxyde, polyester ou polyuréthanne.

Le matériau précédent comprenant un premier élément (1), le film b, une colle (5) et un deuxième élément (2) peut être tel que la surface de jonction (4) du deuxième élément (2) est pré imprégnée de résine epoxyde, polyester ou polyuréthanne et remplace la couche de colle (5).

L'invention concerne aussi une planche à voile constituée de deux éléments de structure (1) et (2), le volume formé par ces éléments (1) et (2) étant rempli de mousse polyuréthanne thermodurcissable caractérisé en ce que le film (b) est interposé entre la mousse et au moins l'un des éléments (1) et (2).

Selon une forme particulière de cette planche à voile le film b se présente sous forme d'une enveloppe tubulaire adhérent aux éléments de structure (1) et (2) et contenant toute la mousse.

L'invention concerne aussi un matériau multicouches comprenant :

a une couche de polyamide aliphatique ou polyamide amorphe.

b un film comprenant un mélange :

b1 d'un polyesteramide ou d'un polyetheramide

b2 une copolyoléfine modifiée et tel que b1 / (b1 + b2) est supérieur à 50 % en poids, la copolyoléfine modifiée étant choisie parmi les caoutchoucs d'éthylène et de propylène maléisés et les copolymères d'éthylène, de propylène et de diène maléisés, caractérisé en ce qu'il comprend les couches coextrudées a et b collées par formage à chaud du côté de b sur un matériau synthétique de préférence à base de résine epoxyde, de polyester ou de polyuréthanne.

L'invention concerne aussi un matériau multi-couches comprenant :

a une couche de polyamide aliphatique ou polyamide amorphe.

b un film comprenant un mélange

b1 d'un polyesteramide ou d'un polyetheramide b2 une copolyoléfine modifiée et tel que b1 / (b1 + b2) est supérieur à 50 % en poids, la copolyoléfine modifiée étant choisie parmi les caoutchoucs d'éthylène et de propylène maléisés et les copolymères d'éthylène, de propylène et de diène maléisés, caractérisé en ce qu'il comprend les couches coextrudées a et b collées du côté de b sur un matériau à base de résine epoxyde, de polyester ou de polyuréthanne; ledit matériau étant recouvert ou imprégné de résine epoxyde, de polyester ou de polyuréthanne.

Le polyesteramide ou polyetheramide b1 représente au moins 50% et de préférence au moins 60% du poids total (b1 + b2).
Les élastomères thermoplastiques ou TPE à base de polyamide peuvent être des copolymères statistiques ou séquencés.
Les copolymères sont formés par l'enchaînement aléatoire des divers constituants (monomères et/ou prépolymères) tandis que les copolymères séquencés ou blocs préférés par la demanderesse, sont formés à partir de blocs présentant une certaine longueur de chaîne de leurs divers constituants.Les copolymères à base de polyamide selon l'invention sont soit des polyesteramides soit des polyétheramides.Les polyétheramides séquencés ou polyéther bloc amides peuvent notamment résulter de la copoly-condensation de séquences polyamides à extrémités réactives avec des séquences polyéthers à extrémités réactives, telles que, entre autres

a) Séquences polyamides à bouts de chaînes diamines avec des séquences polyoxalkylènes à bouts de chaînes dicaboxyliques.
b) Séquences polyamides à bouts de chaînes dicarboxyliques avec des séquences polyoxyalkykènes à bouts de chaînes diamines obtenues par cyanoéthylation et hydrogénation de séquences poly-oxyalkylènes alpha, oméga, dihydroxylées aliphati-ques appelées polyétherdiols.
c) Séquences polyamides à bouts de chaînes dicarboxyliques avec des polyétherdiols, appelés polyétheresteramides particulièrement préférés par la demanderesse.La composition et la fabrication de tels polyétheresteramides ont été décrites dans les brevets français n° 2 273 021 et 2 401 947 dont le contenu s'ajoute à la présente description.

La masse moléculaire moyenne en nombre de ces séquences polyamides est généralement comprise entre 500 et 10 000 et plus particulièrement entre 600 et 5 000. Les séquences polyamides des polyétheresteramides sont formées de préférence de polyamides aliphatique et/ou de polyamide amorphe ou de copolyamide résultant de la polycondensation de leurs monomères.
La masse moléculaire moyenne en nombre des polyéthers est comprise généralement entre 200 et 6000 et plus particulièrement entre 600 et 3000.Les séquences polyéthers consistent le plus souvent en polytétraméthylène glycol (PTMG), polyéthylène glycol (PEG) et/ou de polypropylène glycol (PPG).
La viscosité inhérente des polyétheresteramides est avantageusement comprise entre 0,8 et 2,05. Elle est mesurée dans le métacrésol à 20°C avec une concentration initiale de 0,5 g de polymère pour 100 g de métacrésol.
Les polyétheresteramides peuvent être formés de 5 à 85 % en poids de polyéther, de 95 à 15 % en poids de polyamide, et de préférence de 30 à 85 % en poids de polyéther et de 70 à 15 % en poids de polyamide.Les polyétheresteramides préférés par la demanderesse sont ceux dont les séquences polyamides sont essentiellement constituées de PA-11, 12 et/ou 12.12 et lorsque l'on recherche une composition ayant des propriétés antistatiques, on utilise de préférence des polyétheresteramides dont les séquences polyéthers sont essentiellement constituées de polyéthylène glycol (PEG).
A titre d'exemple de caoutchouc EPR ou EPDM maleisé on peut citer :

* les caoutchoucs d'éthylène et de propylène maléisés (EPRm), particulièrement, préférés par la demanderesse, contenant de 0,1 à 2 % en poids d'anhydride maléique.
* les copolymères d'éthylène, de propylène et de diène maléisés (EPDMm).

Aux compositions des films b décrits ci-dessus, on peut incorporer divers autres constituants tels que des charges, des pigments ou colorants, divers additifs.

A titre d'exemple de charges, on peut citer les fibres de verre, de carbone, aramides, le talc, la silice, le kaolin, les billes et fibres de verre, les céramiques, les charges métalliques, les sels et les oxydes métalliques tels que poudre d'aluminium, carbonates de calcium et de manganèse, poudre de ferrite, oxyde de titane.

En général, on peut incorporer jusqu'à 50 % et de préférence jusqu'à 40 % en poids de charges par rapport à la composition du film b̲.

A titre d'exemple d'additifs, on peut citer des agents anti-UV, des agents démoulants, des modifiants choc.

En raison de leur mise en oeuvre aisée, de leurs bonnes propriétés mécaniques (notamment résistance au choc à froid, à l'abrasion, résistance à la déchirure...), de leur stabilité dimensionnelle entre -20 et 60°C, de leur bon comportement au vieillissement ainsi que de le excellente aptitude au collage et à la décoration, les films b̲ selon l'invention peuvent être utilisés seuls ou pour la réalisation d'objets complexes ou composites : pièces surmoulées, films coextrudés, laminés.

Les films ou feuilles selon l'invention sont obtenus selon tout procédé d'extrusion connu tel que l'extrusion-calandrage à plat, l'extrusion-plaxage, l'extrusion-soufflage, la température d'extrusion étant en général comprise entre 190 et 250°C.

Les films b̲ sont utilisés dans la fabrication de films multicouches obtenus par exemple par co-extrusion, contre-collage à chaud.

A titre d'exemple de films multicouches, on peut citer ceux qui comprennent :

-   une couche de polyamide aliphatique (tel que PA-6, PA-6.6, PA-11,PA-12, PA-12.12), de polyamide amorphe, d'élastomère thermoplastique à base de polyamide et/ou de copolymère d'éthylène et d'alcool vinylique (EVOH)
-   un film b̲

Ces films peuvent être collés sur des pièces rigides et notamment sur des pièces métalliques (telles que des câbles, tôles) ainsi que sur des matériaux synthétiques de préférence à base de, recouverts ou imprégnés de résine(s) époxyde(s) et/ou polyester(s) et/ou polyuréthane(s). Le procédé de fabrication de ces matériaux composites peut se dérouler en deux étapes : On procède d'abord à la co-extrusion du film bi-couche puis on le colle à chaud du côté du film b̲ selon l'invention, sur le support en matière synthétique par exemple, par formage à chaud ou thermoformage.

Ces matériaux composites peuvent être décorés selon la méthode d'impression de transfert d'encres sublimables et notamment selon les procédés décrits dans la demande de brevet FR 2 596 286.

La décoration de ces matériaux peut également être mise en oeuvre selon d'autres techniques telles que par sérigraphie, peinture ou vernissage, transfert à chaud, tampographie, jet d'encre, marquage-laser, étant entendu que les techniques de décoration peuvent s'appliquer aux films b̲ selon l'invention, utilisés sous n'importe quelle forme (films multi-couches, pièces surmoulées, laminées...)

Les matériaux composites constitués du film bi-couche décrit ci-dessus et d'un support imprégné de résine(s) époxyde(s) et/ou polyester et/ou polyuréthane éventuellement décorés sont particulièrement adaptés pour la réalisation de dessus, de planche à voile, à roulettes, planche de surf, ski nautique, coques de bateau, panneaux de décoration pour bas de carrosserie automobile, laminés anti-bruit, ou d'isolation thermique.

Les films mono-couches b̲ peuvent également servir de liant de co-extrusion pour films multicouches permettant de faire adhérer des couches dont le collage est difficile voire impossible.

A titre d'exemple, on peut citer l'utilisation de films de composition selon l'invention comme liant de co-extrusion d'un film à base de polycarbonate (PC) d'une part et d'un film à base de copolymère d'éthylène et d'alcool vinylique (EVOH) d'autre part.

La présente invention concerne également le procédé de collage d'un film b̲ selon l'invention pour la réalisation d'un matériau composite réalisé par assemblage de plusieurs éléments préalablement enduits ou imprégnés d'une colle thermodurcissable de type époxyde et/ou polyester ou d'une mousse polyuréthane par exemple. Naturellement, cette colle doit être compatible avec tous les éléments à assembler. Ces liants ne suffisent généralement pas à faire adhérer tous les éléments que l'on souhaite utiliser. Pour obtenir l'adhérence sur certains éléments, on se propose donc d'utiliser les films de collage b̲ thermoplastiques de l'invention.Ce procédé de fabrication de matériau composite comprenant une étape d'assemblage d'au moins un premier élément et un second élément par action d'une couche de colle de résine ou de mousse entre les surfaces de jonction des deux éléments se caractérise par le fait que l'on interpose au moins entre la couche de colle et la surface de jonction du premier élément un film de collage thermoplastique selon l'invention.

D'autres objets, caractéristiques et avantages ressortiront de la description des modes de réalisation particuliers, faite en relation avec les figures jointes, parmi lesquelles :

-   les figures 1 à 4 illustrent un procédé d'assemblage par collage selon un premier mode de réalisation de l'invention ;
-   les figures 5 à 6 illustrent un procédé d'assemblage par collage selon un second mode de réalisation de l'invention.
-   les figures 7 et 8 illustrent un procédé d'assemblage par collage selon un autre mode de réalisation.

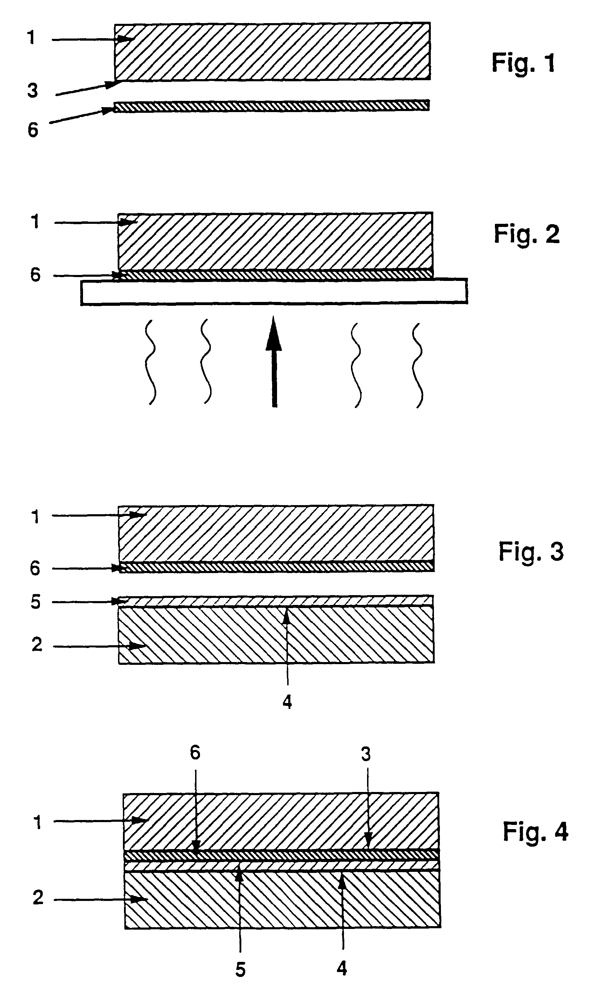

Dans le mode de réalisation représenté sur les figures 1 à 4, le procédé de l'invention permet l'assemblage d'un premier élément (1) et d'un second élément (2), selon leurs surfaces de jonction respective (3) et (4), au moyen d'une couche de colle (5) interposée entre lesdites surfaces de jonction (3) et (4). Le second élément (2) est supposé compatible avec la colle (5), c'est-à-dire que la colle (5) présente un bon pouvoir d'adhésion sur le second élément (2). Par contre, le premier élément (1) est en une matière pouvant ne pas présenter une bonne compatibilité avec la colle (5), c'est-à-dire que la colle (5) ne présente pas un bon pouvoir d'adhésion sur la surface de jonction (3) du premier élément (1).

Pour permettre l'assemblage du premier élément (1) avec le second élément (2), le premier élément (1) n'ayant pas un bon pouvoir d'adhérence avec la colle (5), on interpose entre la couche de colle (5) et la surface de jonction (3) du premier élément (1) un film (6) composé d'un mélange de l'invention b c'est-à-dire un mélange d'élastomère(s) thermoplastique(s) à tel que défini plus haut.

En ce qui concerne la présence de la colle (5), une première possibilité, représentée sur les figures (1) à (4), consiste à enduire la surface de jonction (4) du second élément (2) d'une colle (5), comme le représente la figure (3), avant assemblage par pressage de la couche de colle (5) contre le film (6) et obtention de l'ensemble représenté sur la figure 4.

Une seconde façon d'assurer la solidarisation entre le film et le second élément (2) peut être prévue dans le cas où le second élément (2) comporte une surface de jonction (4) à base de résine thermodurcissable non-entièrement réticulée. Il peut s'agir, dans ce cas particulier, d'un élément de renfort pré-imprégné de résine. On peut alors appliquer la surface de jonction (4) du second élément (2) directement contre le film (6), et, par chauffage, la résine non entièrement réticulée du second élément (2) assure elle-même la fonction de collage, l'adhésion étant obtenue par complément de réticulation de ladite résine.

Les résines généralement utilisées sont des résines époxydes, et/ou polyesters et/ou polyuréthane. On peut avantageusement utiliser un film (6) à base de polyétheresteramide à au moins 50 %, de préférence 60 % en poids, et de copolymère d'éthylène propylène (EPR) maléisé.

Ce mode de réalisation permet, par exemple, d'assurer le collage par une colle époxyde, une colle polyester et/ou polyuréthane d'un premier élément (1) dont la surface de jonction est constituée de l'un des matériaux suivants : polyamide, polyéthylène, polypropylène, polyéthylène et polybutylène téréphtalate, aluminium traité, alliage d'aluminium ou acier. A titre d'exemple, l'utilisation d'un film (6) de l'invention permet le collage d'un premier élément (1) constitué d'un film en polyamide 11 par exemple par une colle (5) en résine époxyde sur un support (2). L'élément (1) peut avantageusement être utilisé comme élément supérieur de décoration et de protection d'une planche à voile par exemple. Dans ce cas particulier, le support (2) peut être un élément de renfort mécanique constitué d'une nappe textile de renfort tissée ou non en fibre de verre, carbone, aramide ou autre, ou encore un élément de renfort métallique en acier, aluminium ou alliage.

Dans le mode de réalisation représenté sur les figures 1 à 4, l'assemblage s'effectue par étapes successives :

*　au cours d'une première étape illustrée par les figures 1 et 2 on assemble par calandrage ou pressage à chaud, ou coextrusion, le film (6) sur la surface de jonction (3) du premier élément (1) présentant un défaut d'adhérence avec la colle (5) ; la température doit être élevée au niveau du point de ramollissement du film ;

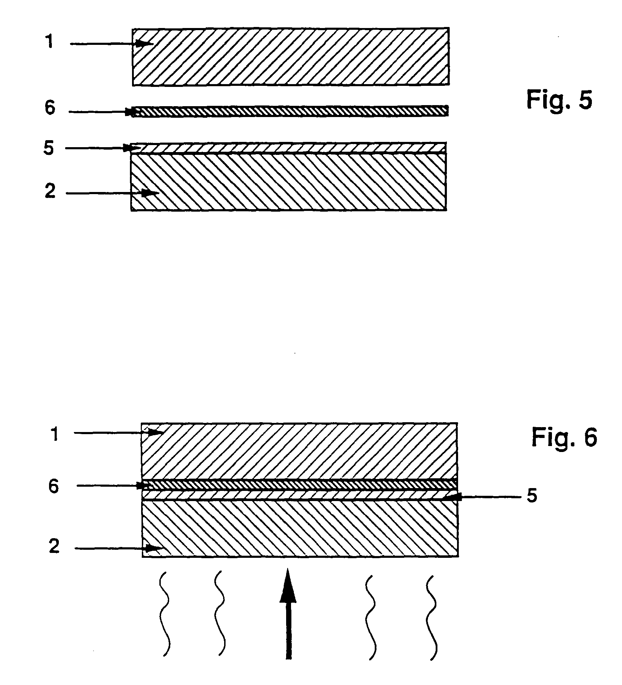

*　au cours d'une seconde étape, on applique la colle (5) sur la surface de jonction (4) du second élément (2), comme le représente la figure 6 ;

*　au cours d'une troisième étape, on applique l'une contre l'autre les couches constituées par la colle (5) et le film (6), réalisant l'assemblage tel que représenté sur la figure 4.

Dans le mode de réalisation représenté sur les figures 5 et 6, on dispose tous les éléments dans un moule, c'est-à-dire dans l'ordre : le premier élément (1), le film (6), la couche de colle (5), le second élément (2) ; par pressage à chaud, on applique tous les éléments les uns sur les autres, et on réalise l'assemblage en une étape. La température de l'ensemble doit également être élevée au niveau du point de ramollissement du film.

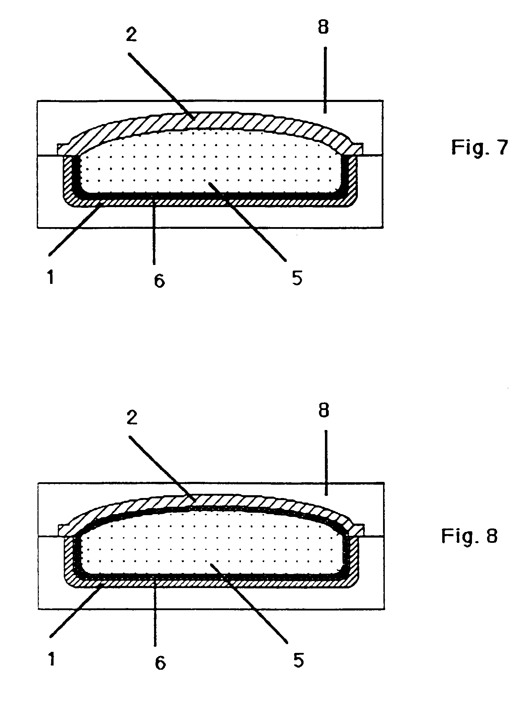

Un troisième mode de réalisation de l'invention représenté par la figure 7 consiste à assembler les éléments de la structure d'une planche à voile par exemple (1) et (2) par injection d'une mousse thermodurcissable (5) de type polyuréthane et expansible. La mousse (5) n'étant pas compatible avec tous les éléments à assembler, on assure donc l'adhésion par l'interposition d'un film de collage (6) entre la mousse et l'élément à coller. Ainsi, on dispose préalablement un premier élément (1) de structure, un film de collage (6) puis un second élément (2) dans un moule (8). Puis, on injecte la mousse (5) de polyuréthane qui, après sa phase d'expansion puis de durcissement, adhère parfaitement au film de collage (6) et au premier élément (1). La chaleur dégagée par la réaction d'exothermie suffit généralement à porter le film de collage à son point de ramollissement et à entraîner le collage sur l'élément de structure. Mais l'on peut, bien entendu, apporter un complément calorifique après ou pendant l'opération de moulage. Bien entendu, on peut envisager de la même façon la disposition d'un film de collage (6) selon l'invention entre la mousse (5) et le second élément (2) lorsque celui-ci ne représente également aucun pouvoir d'adhésion ou un faible pouvoir d'adhésion avec la mousse. Dans ce cas, on peut prévoir que le film se présente sous la forme particulière d'une enveloppe tubulaire (6) dans laquelle est injectée la mousse (5), comme la montre la figure 8. L'enveloppe tubulaire (6) a pour avantage d'assurer l'imperméabilité à un éventuel débordement de la mousse.

On comprendra que la présente invention n'est pas limitée aux modes de réalisation particuliers qui ont été explicitement décrits et que son étendue comprend les divers procédés de collage d'éléments dans d'autres applications couvrant d'autres domaines tels que ceux de l'équipement automobile, des laminés anti-bruits ou d'isolation thermique, des semelles de chaussures, des combinaisons isothermiques, etc....

Les exemples suivants illustrent l'invention sans toutefois la limiter :

Sauf indication contraire dans tout ce qui suit, les proportions des constituants sont données en poids.

## EXEMPLE I

Dans une extrudeuse mono-vis dont la vitesse de la vis est réglée à 33 trs/mn, on compounde 80 parties de polyéther estéramide ($A_1$) et 20 parties de copolymère d'éthylène et de polypropylène maléisé ($B_1$).

La température d'extrusion est comprise entre 200 et 220°C et le débit de l'extrudeuse est fixé à 30 kg/h.

En sortie de filière, la composition obtenue sous forme de joncs de granulométrie moyenne égale à environ 3 mm a un indice de fusion de 1,31 mesuré à 190 °C sous une charge de 2,16 kg selon la norme ASTM D 1238.

Le polyétheresteramide ($A_1$) utilisé est constitué de 88 % de séquences de PA-12 ($\overline{Mn}$ = 1 000) et de 12 % de séquences de PTMG ($\overline{Mn}$ = 1 000).

L'EPR maléisé utilisé contient 70 % d'éthylène. Son taux d'anhydride total est compris entre 1,08 et 1,5 % et son indice de fusion (mesuré à 230°C sous une charge de 10 kg) est égal à 9.

On procède ensuite à l'extrusion d'un film de composition I.

Les conditions d'extrusion sont les suivantes :

- température d'extrusion : 184°C/206°C/215°C
- température des canaux : 231°C/236°C
- température filière : 228°C/236°C

La vitesse de la vis est de 80 trs/mn et la vitesse de tirage est de 20 m/mn.

En sortie de filière, on obtient un film d'épaisseur égale à environ 50 μm.

## EXEMPLE II

Dans les mêmes conditions qu'en I, on compounde une composition II constituée de 70 parties de polyétheresteramide ($A_2$) et de 30 parties d'EPR m ($B_1$).

Le polyétheresteramide $B_2$ est constitué de 88 % de séquences de PA-12 ($\overline{Mn}$ = 5 000) et de 12 % de séquences de PTMG ($\overline{Mn}$ = 650).

On procède ensuite à l'extrusion d'un film de composition II dans des conditions identiques à celles décrites en I.

## EXEMPLE III

Dans les mêmes conditions qu'en I, on compounde une composition III constituée de 90 parties de polyétheresteramide ($A_2$) et 10 parties d'EPRm ($B_2$).

L'EPRm ($B_2$) utilisé contient 50 % d'éthylène. Son taux d'anhydride total est égal à 1,26 % et son indice de fusion (mesuré à 230°C sous une charge de 2,16 kg) est égal à 3.

La dureté Shore D (5s) de III mesurée selon la norme ISO 868 est égale à 60,6.

Sa contrainte à la rupture en traction mesurée selon la norme ASTM D638 est égale à 20,9 MPa.

Son module d'élasticité en flexion à 20°C mesuré selon la norme ASTM D790 est égal à 357 MPa.

Sa résistance à la déchirure mesurée selon la norme ISO 34 (déchirure parallèle à l'injection) est égale à 147,4 kN/m.

On procède ensuite à l'extrusion d'un film de composition III dans les mêmes conditions que celles décrites en I.

## Revendications

1. Matériau multicouches comprenant :

    a une couche d'élastomère thermoplastique à base de polyamide ou copolymère EVOH ou leur mélange.

    b un film comprenant un mélange :

      b1 d'un polyesteramide ou d'un polyetheramide
      b2 une copolyoléfine modifiée et tel que b1 / (b1 + b2) est supérieur à 50 % en poids, la copolyoléfine modifiée étant choisie parmi les caoutchoucs d'éthylène et de propylène maléisés et les copolymères d'éthylène, de propylène et de diène maléisés.

2. Matériau selon la revendication 1 caractérisé en ce qu'il comprend les couches coextrudées a et b collées par formage à chaud du côté de b sur un matériau synthétique de préférence à base de résine epoxyde, de polyester ou de polyuréthanne.

3. Matériau selon la revendication 1 caractérisé en ce qu'il comprend les couches coextrudées a et b collées du côté de b sur un matériau à base de résine epoxyde, de polyester ou de polyuréthanne ; ledit matériau étant recouvert ou imprégné de résine epoxyde, de polyester ou de polyuréthanne.

4. Matériau comprenant successivement :

   - un film de polycarbonate
   - le film b de la revendication 1
   - un film à base de copolymère EVOH

5. Matériau multicouches comprenant successivement :

   - un premier élément (1)
   - le film b de la revendication 1
   - une colle (5)
   - un deuxième élément (2)

6. Matériau selon la revendication 5 caractérisé en ce que (i) le premier élément (1) à une surface de jonction (3) en l'un des matériaux suivants : polyamide, polyéthylène, polypropylène, polyéthylène ou polybutylène téréphtalate, aluminium traité, alliage d'aluminium ou acier et (ii) que la colle (5) est une colle epoxyde, polyester ou polyuréthanne.

7. Matériau selon la revendication 5 caractérisé en ce que la surface de jonction (4) du deuxième élément (2) est pré imprégnée de résine epoxyde, polyester ou polyuréthanne et remplace la couche de colle (5).

8. Planche à voile constituée de deux éléments de structure (1) et (2), le volume formé par ces éléments (1) et (2) étant rempli de mousse polyuréthanne thermodurcissable caractérisé en ce que le film (b) de la revendication 1 est interposé entre la mousse et au moins l'un des éléments (1) et (2).

9. Planche à voile selon la revendication 8 caractérisé en ce que le film b se présente sous forme d'une enveloppe tubulaire adhérent aux éléments de structure (1) et (2) et contenant toute la mousse.

10. Matériau multicouches comprenant :

    a une couche de polyamide aliphatique ou polyamide amorphe.

    b un film comprenant un mélange :

       b1 d'un polyesteramide ou d'un polyetheramide
       b2 une copolyoléfine modifiée et tel que b1 / (b1 + b2) est supérieur à 50 % en poids, la copolyoléfine modifiée étant choisie parmi les caoutchoucs d'éthylène et de propylène maléisés et les copolymères d'éthylène, de propylène et de diène maléisés, caractérisé en ce qu'il comprend les couches coextrudées a et b collées par formage à chaud du côté de b sur un matériau synthétique de préférence à base de résine epoxyde, de polyester ou de polyuréthanne.

11. Matériau multicouches comprenant :

    a une couche de polyamide aliphatique ou polyamide amorphe.

    b un film comprenant un mélange

       b1 d'un polyesteramide ou d'un polyetheramide
       b2 une copolyoléfine modifiée et tel que b1 / (b1 + b2) est supérieur à 50 % en poids, la copolyoléfine modifiée étant choisie parmi les caoutchoucs d'éthylène et de propylène maléisés et les copolymères d'éthylène, de propylène et de diène maléisés, caractérisé en ce qu'il comprend les couches coextrudées a et b collées du côté de b sur un matériau à base de résine epoxyde, de polyester ou de polyuréthanne; ledit matériau étant recouvert ou imprégné de résine epoxyde, de polyester ou de polyuréthanne.

**Patentansprüche**

1. Mehrschichtenmaterial, das enthält:

   a eine Schicht aus einem thermoplastischen Elastomer auf Polyamidbasis oder E/VOH-Copolymer-Basis oder auf der Basis eines Gemischs aus Polyamid und E/VOH-Copolymer, b einen Film, der ein Gemisch aus

      b1 einem Polyesteramid oder einem Polyetheramid und
      b2 einem modifizierten Polyolefin-Copolymer mit einem Gewichtsverhältnis b1/(b1 + b2) größer als 50 % enthält, wobei das modifizierte Polyolefin-Copolymer unter maleinisierten Ethylen-Propylen-Kautschuken und maleinisierten Ethylen-Propylen-Dien-Copolymeren ausgewählt ist.

2. Mehrschichtenmaterial nach Anspruch 1, dadurch gekennzeichnet, daß es die coextrudierten Schichten a und b auf einem synthetischen Material enthält, das vorzugsweise ein Material auf Epoxidharzbasis, Polyesterbasis oder Polyurethanbasis ist, mit dem die coextrudierten Schichten a und b auf der Seite der Schicht b durch Warmformen verklebt sind.

3. Mehrschichtenmaterial nach Anspruch 1, dadurch gekennzeichnet, daß es die coextrudierten Schichten a und b auf einem Material auf Epoxidharzbasis, Polyesterbasis oder Polyurethanbasis enthält, mit dem die coextrudierten Schichten a und b auf der Seite der Schicht b durch Warmformen verklebt sind, wobei dieses Material mit einem Epoxidharz, einem Polyester oder einem Polyurethan überzogen oder imprägniert ist.

4. Mehrschichtenmaterial, das aufeinanderfolgend enthält:

   - einen Polycarbonatfilm,
   - einen Film b gemäß Anspruch 1,
   - einen Film auf E/VOH-Copolymer-Basis.

5. Mehrschichtenmaterial, das aufeinanderfolgend enthält:

   - ein erstes Element (1),
   - den Film b) gemäß Anspruch 1,
   - einen Klebstoff (5),
   - ein zweites Element (2).

6. Mehrschichtenmaterial nach Anspruch 5, dadurch gekennzeichnet, daß (1) das erste Element (1) eine Verbindungsfläche (3) aus einem Polyamid, Polyethylen, Polypropylen, Polyethylen- oder Polybutylenterephthalat, aus behandeltem Aluminium oder aus einer Aluminium- oder Stahllegierung aufweist und daß (ii) der Klebstoff (5) ein Epoxid-, Polyester- oder Polyurethanklebstoff ist.

7. Mehrschichtenmaterial nach Anspruch 5, dadurch gekennzeichnet, daß die Verbindungsfläche (4) des zweiten Elements (2) mit einem Epoxid-, Polyester- oder Polyurethanharz vorimprägniert ist und die Klebstoffschicht (5) ersetzt.

8. Windsurfbrett, das aus zwei Strukturelementen (1) und (2) besteht, wobei der zwischen diesen beiden Elementen (1) und (2) gebildete Hohlraum mit wärmehärtbarem Polyurethanschaum gefüllt ist, dadurch gekennzeichnet, daß der Film b gemäß Anspruch 1 zwischen dem Schaum und mindestens einem der Strukturelemente (1) und (2) eingefügt ist.

9. Windsurfbrett nach Anspruch 8, dadurch gekennzeichnet, daß der Film b in Form einer röhrenförmigen Hülle vorliegt, die an den Strukturelementen (1) und (2) klebt und den gesamten Schaum enthält.

10. Mehrschichtenmaterial, das enthält:

a eine Schicht aus aliphatischem Polyamid oder amorphem Polyamid,
b einen Film, der ein Gemisch aus

   b1 einem Polyesteramid oder einem Polyetheramid und
   b2 einem modifizierten Polyolefin-Copolymer mit einem Gewichtsverhältnis b1/(b1 + b2) größer als 50 % enthält, wobei das modifizierte Polyolefin-Copolymer unter maleinisierten Ethylen-Propylen-Kautschuken und maleinisierten Ethylen-Propylen-Dien-Copolymeren ausgewählt ist, dadurch gekennzeichnet, daß es die coextrudierten Schichten a und b auf einem synthetischen Material enthält, das vorzugsweise ein Material auf Epoxidharzbasis, Polyesterbasis oder Polyurethanbasis ist, mit dem die coextrudierten Schichten a und b auf der Seite der Schicht b durch Warmformen verklebt sind.

11. Mehrschichtenmaterial, das enthält:

a eine Schicht aus aliphatischem Polyamid oder amorphem Polyamid,
b einen Film, der ein Gemisch aus

   b1 einem Polyesteramid oder einem Polyetheramid und
   b2 einem modifizierten Polyolefin-Copolymer mit einem Gewichtsverhältnis b1/(b1 + b2) größer als 50 % enthält, wobei das modifizierte Polyolefin-Copolymer unter maleinisierten Ethylen-Propylen-Kautschuken und maleinisierten Ethylen-Propylen-Dien-Copolymeren ausgewählt ist, dadurch gekennzeichnet, daß es die coextrudierten Schichten a und b auf einem Material auf Epoxidharzbasis, Polyesterbasis oder Polyurethanbasis enthält, mit dem die coextrudierten Schichten a und b auf der Seite der Schicht b durch Warmformen verklebt sind, wobei dieses Material mit einem Epoxidharz, einem Polyester oder einem Polyurethan überzogen oder imprägniert ist.

## Claims

1. Multilayer material comprising:

a a layer of thermoplastic elastomer based on polyamide or on EVOH copolymer or on their mixture,
b a film comprising a mixture:

b1 of a polyesteramide or of a polyetheramide

b2 and of a modified copolyolefin, such that b1/ (b1 + b2) is greater than 50% by weight, the modified copolyolefin being chosen from maleicized ethylene and propylene rubbers and maleicized ethylene, propylene and diene copolymers.

2. Material according to Claim 1, characterized in that it comprises the coextruded layers a and b adhesively bonded by hot forming on the side of b to a synthetic material preferably based on epoxide, polyester or polyurethane resin.

3. Material according to Claim 1, characterized in that it comprises the coextruded layers a and b adhesively bonded on the side of b to a material based on epoxide, polyester or polyurethane resin; the said material being covered or impregnated with epoxide, polyester or polyurethane resin.

4. Material successively comprising:

   - a polycarbonate film
   - the film b of Claim 1
   - a film based on EVOH copolymer.

5. Multilayer material successively comprising:

   - a first component (1)
   - the film b of Claim 1
   - an adhesive (5)
   - a second component (2).

6. Material according to Claim 5, characterized in that (i) the first component (1) has a joining surface (3) made of one of the following materials: polyamide, polyethylene, polypropylene, polyethylene or polybutylene terephthalate, treated aluminium, alloy of aluminium or steel, and (ii) in that the adhesive (5) is an epoxide, polyester or polyurethane adhesive.

7. Material according to Claim 5, characterized in that the joining surface (4) of the second component (2) is pre-impregnated with epoxide, polyester or polyurethane resin and replaces the layer of adhesive (5).

8. Windsurfing board composed of two structural components (1) and (2), the space formed by these components (1) and (2) being filled with thermosetting polyurethane foam, characterized in that the film b of Claim 1 is interposed between the foam and at least one of the components (1) and (2).

9. Windsurfing board according to Claim 8, characterized in that the film b exists in the form of a tubular casing adhering to the structural components (1) and (2) and comprising all the foam.

10. Multilayer material comprising:

   a a layer of aliphatic polyamide or amorphous polyamide,
   b a film comprising a mixture:

   b1 of a polyesteramide or of a polyetheramide
   b2 and of a modified copolyolefin, such that b1/ (b1 + b2) is greater than 50% by weight, the modified copolyolefin being chosen from maleicized ethylene and propylene rubbers and maleicized ethylene, propylene and diene copolymers, characterized in that it comprises the coextruded layers a and b adhesively bonded by hot forming on the side of b to a synthetic material preferably based on epoxide, polyester or polyurethane resin.

11. Multilayer material comprising:

   a a layer of aliphatic polyamide or amorphous polyamide,
   b a film comprising a mixture

   b1 of a polyesteramide or of a polyetheramide
   b2 and of a modified copolyolefin, such that bl / (bl + b2) is greater than 50% by weight, the modified copolyolefin being chosen from maleicized ethylene and propylene rubbers and maleicized ethylene, propylene and diene copolymers, characterized in that it comprises the coextruded layers a and b adhesively bonded on the side of b to a material based on epoxide, polyester or polyurethane resin; the said material being covered or impregnated with epoxide, polyester or polyurethane resin.

Fig. 1

Fig. 2

Fig. 3

Fig. 4

1

6

**Fig. 5**

5

2

1

6

**Fig. 6**

5

2

Fig. 7

Fig. 8